# EUROPÄISCHE PATENTANMELDUNG

(11) **EP 0 882 662 A1**
(43) Veröffentlichungstag der Anmeldung: **09.12.1998**
(21) Anmeldenummer: 98109732.2
(22) Anmeldetag: 28.05.1998
(51) Int. Cl.: B65G 17/00, B65G 47/71, B65B 35/24

(54) **Anlage Herstellung von Gebinden aus mehreren Einzelpackungen**

(30) Priorität: 07.06.1997 DE 19724154
(71) Anmelder: Christian Senning Verpackungsautomaten GmbH & Co., D-28239 Bremen (DE)
(72) Erfinder: Wach, Jürgen, 28719 Bremen (DE)
(74) Vertreter: Eisenführ, Speiser & Partner

(57) **Zusammenfassung**

Die Erfindung betrifft eine Anlage sowie eine Verteilvorrichtung zur Herstellung von aus mehreren Einzelpackungen bestehenden Gebinden, wobei die ankommenden Einzelpackungen durch eine Verteilstation (10) wahlweise getrennten Gebindepackern (2, 3) zugeführt werden. Hierdurch ist es möglich, zwei verschiedene Gebindeformationen auf den verschieden ausgerüsteten Gebindepackern (2, 3) herzustellen. Auch ist es möglich, die ankommenden Einzelpackungen nur einem der beiden Gebindepackern zuzuführen und den anderen umzurüsten oder Störungen zu beseitigen, ohne daß der ankommende Packungsstrom in seinem Durchfluß gestört wird.

## Beschreibung

Die Erfindung betrifft eine Anlage zur Herstellung von aus mehreren Einzelpackungen bestehenden Gebinden mit mindestens einem Gebindepacker, dem die Einzelpackungen auf zwei ankommenden Packungsbahnen zweibahnig zugeführt werden. Des weiteren betrifft die Erfindung eine Verteilvorrichtung dieser Anlage.

In Anlagen zur Herstellung und Verpackung von Papiertaschentüchern oder dergleichen werden die Taschentücher zunächst in Einzelpackungen verpackt, und diese Einzelpackungen werden dann zu Gebinden zusammengestellt und weiterverpackt. Solche Anlagen arbeiten mit sehr hoher Geschwindigkeit, z.B. 600 Einzelpackungen pro Minute bei zweibahnigen Maschinen, und bei Störungen oder Umrüstungen an beliebigen Stellen einer solchen Anlage muß dann die gesamte Anlage stillgesetzt und später wieder angefahren werden. Eine Umrüstung im Bereich des Gebindepackers ist dann erforderlich, wenn von einer Gebindeformation auf eine andere umgestellt werden muß, um verschiedenen Kundenanforderungen gerecht zu werden.

Werden den Gebindepackern die Einzelpackungen auf zwei ankommenden Packungsbahnen zweibahnig zugeführt, so ist bei Störungen der Anlage in z. B. einer Packungsbahn eine zweibahnige Zulieferung von Einzelpackungen nicht mehr gewährleistet, so daß dann die gesamte Anlage stillgesetzt werden muß.

Der Erfindung liegt also die Aufgabe zugrunde, eine Anlage bzw. eine Vorrichtung für eine Verpackungsanlage zu schaffen, mit dem bzw. mit der Störungen in der Anlage weitgehend ohne Einfluß auf den kontinuierlichen Lauf bleiben und Umstellungen im Bereich des Gebindepackers kurzzeitig und ohne notwendige Abschaltung der gesamten Anlage möglich sind.

Diese Aufgabe wird gemäß einem Verfahren der eingangs genannten Art dadurch gelöst, daß eine Verteilvorrichtung mit zwei ankommenden Packungsbahnen und vier abgehenden Packungsbahnen vorgesehen ist, an die zwei Gebindepacker mit zweibahniger Zuführung angeschlossen sind, und daß die Verteilvorrichtung derart ausgebildet ist, daß die ankommenden Einzelpackungen wechselweise den beiden Packungsbahnen des einen oder des anderen Gebindepackers, oder den beiden Packungsbahnen beider Gebindepacker, zugeführt werden. Die Gebindepacker sind vorzugsweise jeweils zur Herstellung verschiedener Gebindeformationen eingerichtet, so daß auf einfache Weise eine Umstellung von einer Gebindeformation auf eine andere möglich ist. Darüber hinaus besteht die Möglichkeit, bei Benutzung eines der Gebindepacker den jeweils anderen auf weitere Gebindeformationen umzurüsten und dann anschließend wieder in Betrieb zu nehmen, so daß die Anzahl der Gebindevarianten praktisch unbegrenzt ist.

Bei der erfindungsgemäßen Anlage ist es möglich, die Verteilstation so zu steuern, daß die ankommenden Einzelpackungen nach einem vorbestimmten Verteilerschlüssel (z.B. 50:50, 30:70, usw.) wechselweise den abgehenden Packungsbahnen der beiden Gebindepacker zugeführt werden.

Durch diese vielseitige Steuerung der Verteilstation ist es auch z.B. möglich, beim Ausbleiben von Einzelpackungen auf einer Bahn einer mehrbahnigen Maschine die Einzelpackungen von der nicht gestörten Bahn einem oder beiden Gebindepackern zuzuleiten, um auf den in Betrieb befindlichen Gebindepackern einen weiteren, kontinuierlichen Ausstoß zu gewährleisten. Hierbei ist es auch denkbar, die Verpackungsanlage beim Ausfall einer Packungsbahn schneller laufen zu lassen, um von der intakten Packungsbahn einen ausreichenden Nachschub von Einzelpackungen an die Gebindepacker zu leiten.

Eine Verteilvorrichtung, die sich besonders gut für die erfindungsgemäße Anlage eignet, ist gekennzeichnet durch zwei erste, zwischen zwei Stellungen schaltbare Weichen, in deren Spuren von einem Transportmittel beförderte Mitnehmerträger zum Transport von Einzelpackungen von den ankommenden Packungsbahnen wahlweise zu den abgehenden Packungsbahnen geführt werden, und zwei zweite Weichen, in deren Spuren die Mitnehmerträger nach erfolgtem Transport der Einzelpackungen zu den abgehenden Packungsbahnen wieder in die ursprüngliche Spur an den ankommenden Packungsbahnen zurückgeführt werden. Damit die erste Weiche schnell umgeschaltet werden kann, erfolgt dies gemäß einer vorteilhaften Ausführungsform durch einen mechanischen Kraftantrieb, der zum Umschalten wahlweise mit der Weichenzunge gekoppelt wird. Damit die Umschaltung der Weichenzunge nicht gerade dann erfolgt, wenn sich ein Mitnehmerträger im Bereich der Weiche bzw. der Weichenzunge befindet, ist der Kraftantrieb mit dem Transportmittel für die Mitnehmerträger derart synchronisiert, daß ein Umschalten der ersten Weiche nur dann erfolgen kann, wenn sich kein Mitnehmerträger im kritischen Bereich der Weiche befindet.

Es werden also Vorkehrungen getroffen, daß die in einer Spur ankommenden Packungen abwechselnd verschiedenen abgehenden Packungsbahnen eines jeweiligen angeschlossenen Gebindepackers zugeführt werden, so daß immer sichergestellt ist, daß jeder Gebindepacker auf seinen beiden Bahnen gleichmäßig Packungen erhält, auch wenn z.B. der Zufluß von Packungen auf einer der ankommenden Packungsbahnen der Gesamtvorrichtung gestört ist. Dies wird vorzugsweise dadurch erreicht, daß pro ankommender und pro abgehender Packungsbahn zwei Spuren vorgesehen sind und Schiffchen der zu einer ankommenden Packungsbahn gehörenden, aufeinanderfolgenden Mitnehmerträger in jeweils abwechselnden Spuren laufen, die wiederum zu verschiedenen abgehenden Packungsbahnen führen. Die Mitnehmerträger sind vorzugsweise mit einer Kennung versehen, die angibt, zu welcher Spur der ankommenden Packungsbahnen der jeweilige Mitnehmerträger durch die zweite Weiche zurückgeführt werden muß. Die Kennung besteht zweckmäßiger Weise darin, daß die Schiffchen an den Mitnehmerträgern in zwei verschiedenen seitlich versetzten Stellungen angebracht sind und in getrennten Spuren laufen, durch die sie wieder zu der ursprünglichen Spur der ankommenden Packungsbahn zurückgeführt werden.

Weitere vorteilhafte Ausgestaltungen der Erfindung sind den Unteransprüchen zu entnehmen.

Die Erfindung wird nachfolgend unter Bezugnahme auf die beigefügten Zeichnungen näher erläutert.

Es zeigen:
- Figur 1: eine schematische Draufsicht auf eine Verpackungsanlage mit einer Verteilstation und zwei angeschlossenen Gebindepackern zu Erläuterung des erfindungsgemäßen Verfahrens;
- Figur 2: eine Draufsicht auf die Verteilstation nach Figur 1;
- Figur 3: eine Unteransicht der Verteilstation nach Figur 1;
- Figur 4: einen Ausschnitt einer Draufsicht einer Weiche der Verteilstation;
- Figur 5: einen Ausschnitt aus der Umschaltvorrichtung der Weiche nach Figur 4 in einer ersten Stellung; und
- Figur 6: eine Darstellung ähnlich Figur 5 in einer zweiten Stellung.

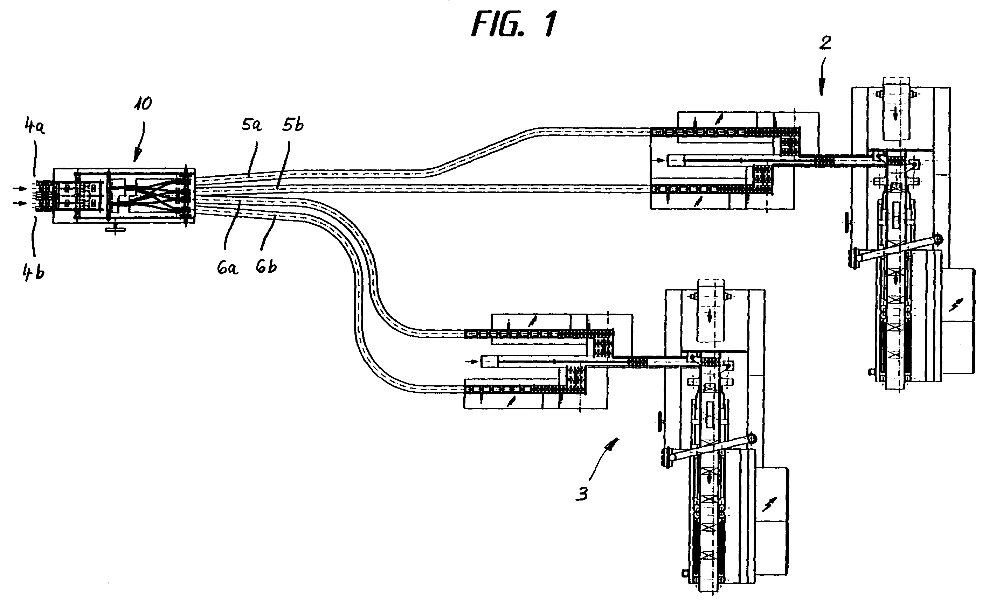

Bei der in Figur 1 in Übersicht dargestellten Anlage kommen Einzelpackungen, z.B. Papiertaschentuchpackungen, auf zwei ankommenden Packungsbahnen 4a und 4b an einer Verteilstation 10 an. Die Verteilstation 10 weist eine Weiche auf, die so aufgebaut ist und gesteuert wird, daß die Einzelpackungen vier abgehenden Packungsbahnen 5a, 5b sowie 6a und 6b zugeführt werden. Die Packungsbahnen 5a und 5b führen zu einem ersten Gebindepacker 2, während die Packungsbahnen 6a und 6b mit einem zweiten Gebindepacker 3 verbunden sind. Durch entsprechende Steuerung der Verteilstation 10 können die verschiedensten Zuteilungen auf die abgehenden Packungsbahnen 5a, 5b; 6a, 6b bzw. zu den Gebindepackern 2, 3 erfolgen. So kann die ganze Produktion auf den ankommenden Packungsbahnen 4a, 4b den beiden abgehenden Packungsbahnen 5a, 5b des Gebindepackers 2 zugeführt werden und dort zu Gebinden weiterverpackt werden, während der Gebindepacker 3 außer Betrieb ist. Handelt es sich nun um zwei Gebindepacker 2, 3 mit unterschiedlichen Gebindeformationen, so kann ein einfaches Umschalten der Verteilstation 10 bewirken, daß der gesamte Packungsstrom auf die abgehenden Packungsbahnen 6a, 6b des Gebindepackers 3 umgeleitet wird, um eine andere Gebindeformation herzustellen. Es ist auch möglich, während des Stillstandes eines der Gebindepacker 2,3 diesen umzurüsten oder Störungen zu beheben, während die Produktion mit dem anderen Gebindepacker ungestört weiterläuft.

Es ist auch möglich, den ankommenden Packungsstrom auf den Packungsbahnen 4a, 4b abwechselnd den abgehenden Packungsbahnen beider Gebindepacker 2, 3 zuzuführen, um entweder gleichzeitig zwei verschiedene Gebindeformationen zu erzeugen, wobei die Gebindepacker 2, 3 dann mit halber Geschwindigkeit der davorliegenden Stationen der Verpackungsanlage arbeiten. Die Aufteilung auf die beiden Gebindepacker 2, 3 muß jedoch nicht gleichmäßig, sondern kann nach einem unterschiedlichen Verhältnis erfolgen, z.B. statt 50:50 auch 40:60, 30:70, 20:80 usw.

Schließlich ist es auch möglich, bei einer Störung der davorliegenden Stationen der Gesamtanlage, die dazu führt, daß nur eine der ankommenden Packungsbahnen 4a oder 4b mit Einzelpackungen versorgt wird, diesen Packungsstrom auf beide Bahnen 5a, 5b oder 6a oder 6b der beiden Gebindepacker 2, 3 gleichmäßig zu verteilen, damit diese voll mit Einzelpackungen versorgt werden. Es ist auch möglich, bei dem Ausfall einer Packungsbahn die davorliegenden Stationen der gesamten Maschine schneller laufen zu lassen, um den halbierten Packungsstrom zu erhöhen.

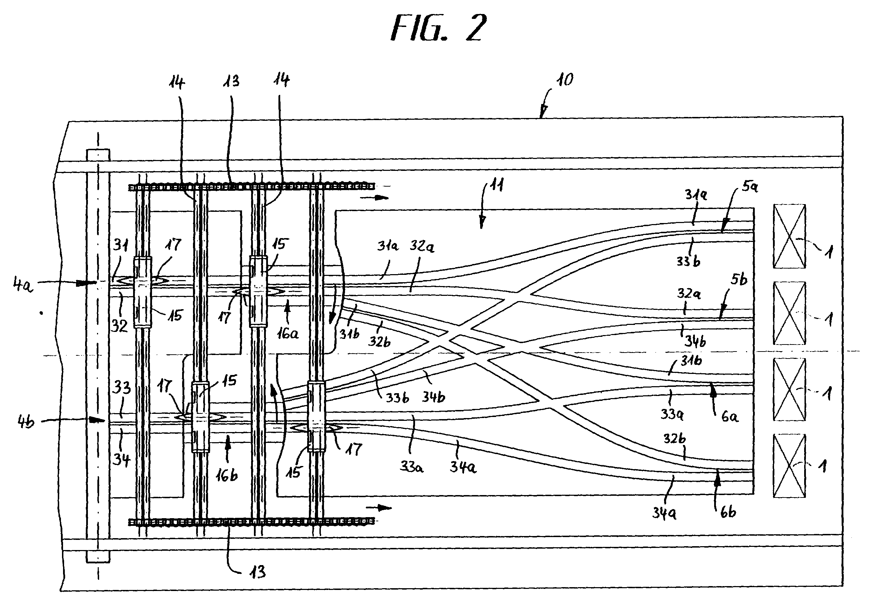

Nachfolgend sollen nun Einzelheiten der Verteilstation 10 nach Figur 1 anhand der Figuren 2 bis 6 beschrieben werden.

Figur 2 zeigt die Oberseite der Verteilstation 10 mit einer ersten Weiche 11. Ein Transportmittel enthält zwei seitlich angeordnete und umlaufende Antriebsketten 13, die über eine Vielzahl von Querstegen 14 miteinander verbunden sind. Auf jedem der Querstege 14 ist ein Mitnehmerträger 15 längsverschieblich angeordnet und nimmt jeweils eine Einzelpackung 1 auf. Jeder der Mitnehmerträger 15 ist mittels eines Schiffchens 17 in Querrichtung in einer von vier Spuren 31, 32, 33, 34 geführt. Die Antriebsketten 13 laufen (in Richtung der Figur 2 gesehen) von links nach rechts um, nehmen also die Mitnehmerträger 15 von links nach rechts mit. Die Querposition der Mitnehmerträger 15 wird dabei durch die Querlage der zugeordneten Spur 31-34 bestimmt.

Die beiden Spuren 31, 32 sind der ersten ankommenden Packungsbahn 4a und die Spuren 33, 34 der zweiten ankommenden Packungsbahn 4b zugeordnet, und auf beiden Packungsbahnen 4a, 4b kommen laufend Einzelpackungen 1 an.

Die einzelnen Mitnehmerträger 15 werden nun mittels ihrer Schiffchen 17 durch die Spuren 31-34 über Weichenzungen 16a, 16b der ersten Weiche 11 und die sich anschließenden Spuren je nach Weichenstellung zu den Spuren 31a, 33b; 32a, 34b; 31b, 33a; 32b, 34a der abgehenden Packungsbahnen 5a, 5b, 6a, 6b geführt, so daß die auf den Mitnehmerträgern 15 befindlichen Einzelpackungen den Gebindepackern 2, 3 zugeleitet werden.

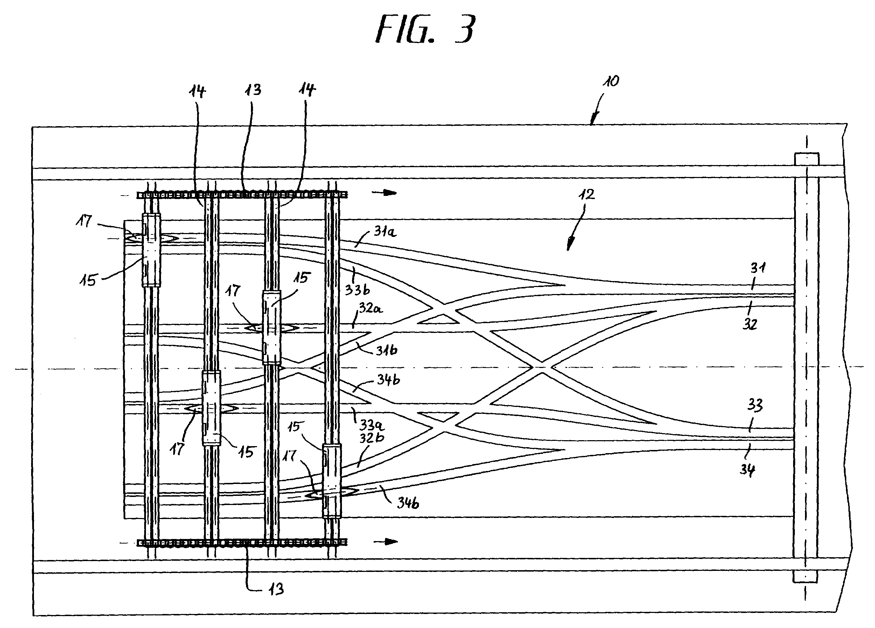

In Figur 3 ist nun die Unterseite der Verteilstation 10 mit einer zweiten Weiche 12 zu sehen. Am Anfang (linke Seite in Figur 3) kommen also die Spuren 31a, 33b; 32a, 34b; 31b, 33a und 32b, 34a an und werden anschließend zu vier Spuren 31, 32, 33, 34 zusammengefaßt, deren Fortsetzung wieder auf der Oberseite (linke Seite der Figur 2) fortgesetzt werden. Dies bedeutet also, daß die auf der Unterseite ankommenden Mitnehmerträger 15, durch ihre Schiffchen 17 geführt, ebenfalls beim Durchlauf der zweiten Weiche 12 wieder in die Anfangslage (in Querposition gesehen) ankommen.

In der Abbildung nach Figur 2 sind die Weichenzungen 16a, 16b in einer ersten Position dargestellt, d.h., die Spuren 31, 32 setzen sich in den anschließenden Spuren 31a, 32a fort, während sich die Spuren 33, 34 in den Spuren 33a, 34a fortsetzen. Dies hat zur Folge, daß die in der ankommenden Packungsbahn 4a ankommenden Einzelpackungen 1 abwechselnd den abgehenden Packungsbahnen 5a, 5b zugeteilt werden, da sich die Schiffchen 17 der Mitnehmerträger 15 in zwei verschiedenen Spuren befinden. Das gleiche erfolgt für die in der Packungsbahn 4b ankommenden Einzelpackungen 1, die abwechselnd den abgehenden Packungsbahnen 6a, 6b zugeteilt werden.

Die Weichenzungen 16a und 16b der ersten Weiche 11 können aus der in Figur 2 dargestellten Position entweder einzeln oder beide gleichzeitig umgeschaltet werden. Ist die Weichenzunge 16a umgeschaltet, so setzen sich die Spuren 31, 32 in den Spuren 31b und 32b fort, so daß die Packungen aus der Packungsbahn 4a abwechselnd den abgehenden Packungsbahnen 6a, 6b zugeleitet werden. Bleibt die Weichenzunge 16b dabei in der in Figur 2 dargestellten Position, so gelangen auch die auf der Packungsbahn 4b ankommenden Einzelpackungen abwechselnd an die abgehenden Packungsbahnen 6a, 6b, d.h., der gesamte Packungsstrom der ankommenden Packungsbahnen 4a, 4b wird dem an die Packungsbahnen 6a, 6b angeschlossenen Gebindepacker 3 zugeleitet. Das gleichzeitige Zuleiten der Einzelpackungen von den ankommenden Packungsbahnen 4a, 4b zu den beiden abgehenden Packungsbahnen 6a, 6b bereitet keine Schwierigkeiten, da sich die Mitnehmerträger 15, die den beiden ankommenden Packungsbahnen 4a, 4b zugeordnet sind, einander abwechseln, so daß die Einzelpackungen nicht gleichzeitig an den abgehenden Packungsbahnen 6a, 6b ankommen. Ähnliche Verhältnisse stellen sich ein, wenn statt der Weichenzunge 16a nur die Weichenzunge 16b umgeschaltet ist; in diesem Fall gelangt der gesamte Packungsstrom der Packungsbahnen 4a, 4b zu den abgehenden Packungsbahnen 5a und 5b des Gebindepackers 2.

In allen vorstehend aufgeführten Kombinationen von Stellungen der Weichenzungen 16a und 16b der ersten Weiche 11, also beide Weichenzungen nicht umgeschaltet, beide Weichenzungen umgeschaltet oder die eine oder die andere Weichenzunge umgeschaltet, wird durch die Spuren der Packungsbahnen sichergestellt, daß der Inhalt jeder ankommenden Packungsbahn 4a, 4b abwechselnd und gleichmäßig auf die zu einem Gebindepacker 2, 3 gehörenden beiden abgehenden Packungsbahnen 5a, 5b bzw. 6a, 6b verteilt wird. Sollten z.B. auf der einen oder anderen ankommenden Packungsbahn 4a oder 4b keine Packungen ankommen, z.B. aufgrund einer Störung, so ist also immer sichergestellt, daß jeweils beide Packungsbahnen der Gebindepacker 2 und/oder 3 gleichmäßig mit Packungen versorgt werden.

Selbstverständlich wird bei Ausfall einer ankommenden Packungsbahn 4a oder 4b bei den Gebindepackern 2, 3 dann nur die halbe Packungsmenge ankommen, aber die Gebindepacker können dennoch vollständige Gebinde herstellen. Werden beide ankommenden Packungsbahnen 4a und 4b laufend mit hoher Geschwindigkeit mit Packungen beschickt, so müssen die angeschlossenen Gebindepacker bei gleichzeitiger Versorgung nur mit der halben Geschwindigkeit der vorne zuliefernden Verpackungsmaschine laufen.

Es ist klar, daß die Weichenzungen 16a, 16b nur dann umgeschaltet werden können, wenn sich die Schiffchen 17 der Mitnehmerträger 15 nicht an einer kritischen Stelle der ersten Weiche 11 befinden, z.B. an einem Übergang zwischen den Spuren 31-34 und den entsprechenden Spuren auf den Weichenzungen 16a, 16b. Aus diesem Grunde muß sichergestellt werden, daß die Weichenzungen 16a, 16b nur dann umgeschaltet werden, wenn sich keine der Schiffchen 17 an dieser kritischen Stelle befindet.

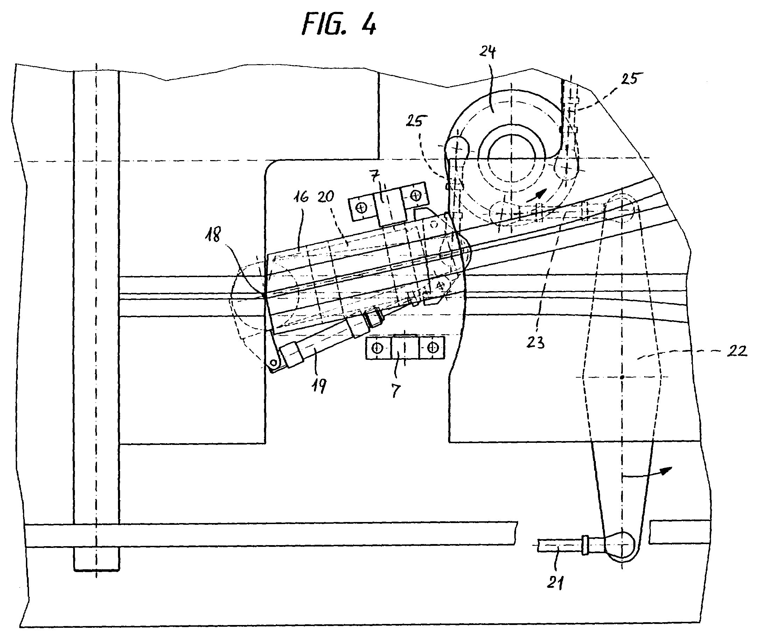

Nachfolgend soll nun der Betätigungsmechanismus für die beiden Weichenzungen 16a, 16b der ersten Weiche 11 anhand der Figuren 4 bis 6 beschrieben werden.

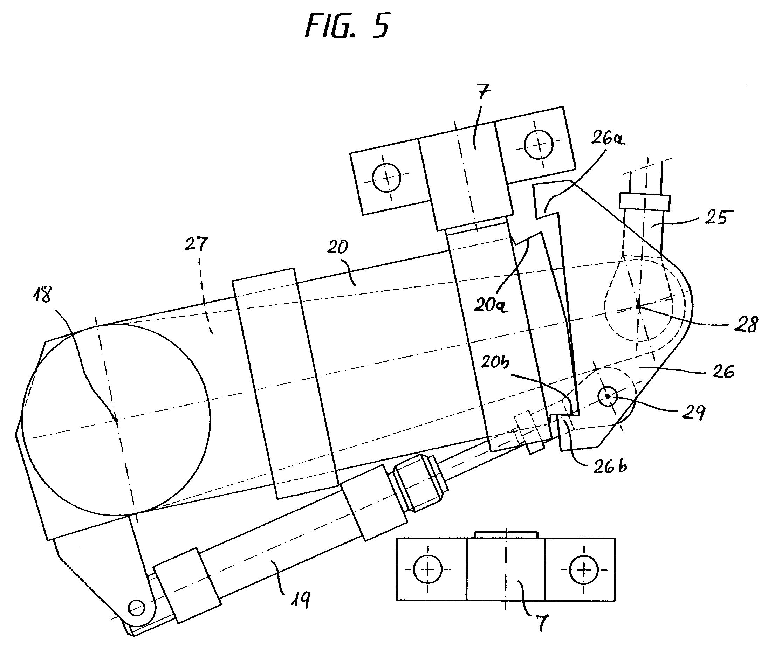

Ein Weichenträger 20, auf dem die Weichenzunge 16 fest montiert ist, ist um eine gestellfeste Schwenkachse 18 schwenkbar gelagert, und zwar zwischen der in Figur 4 ausgezogen dargestellten Position und einer darunterliegenden strichpunktierten Position. Wie insbesondere aus Figur 5 deutlicher hervorgeht, ist unterhalb des Weichenträgers 20 ein Schwenkplattenträger 27 um die Schwenkachse 18 schwenkbar gelagert. An dem freien Ende des Schwenkplattenträgers 27 greift in einem Schwenkpunkt 28 eine Betätigungsstange 25 an, die (siehe Figur 4) von einem Drehteller 24 betätigt wird. Der Drehteller 24 betätigt auch gleichzeitig eine zweite Betätigungsstange 25, die zu der anderen Weichenzunge der ersten Weiche 11 führt. Der Drehteller 24 wiederum wird über eine weitere Betätigungsstange 23 und einen doppelarmigen Hebel 22 von einer weiteren, hin- und hergehenden Stange 21 eines Kraftantriebes derart angetrieben, daß der Drehteller 24 sich ständig um einen bestimmten Betrag hin- und herdreht.

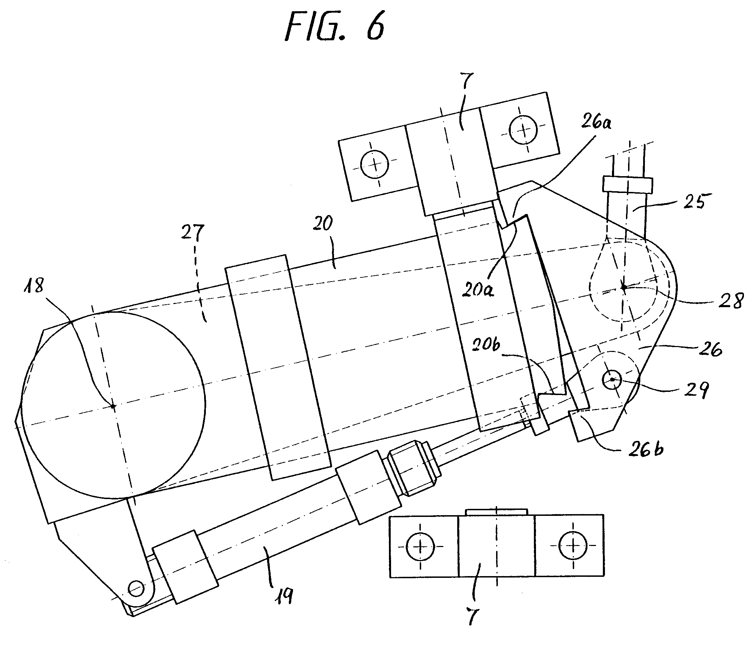

An dem freien Ende des Schwenkplattenträgers 27 ist nun in dem Schwenkpunkt 28, an der auch die Betätigungsstange 25 angreift, eine Schwenkplatte 26 schwenkbar aufgehängt. Mit einem Anlenkpunkt 29 der Schwenkplatte 26 ist der Kolben eines Luftzylinders 19 gekoppelt. In der einen Endposition des Luftzylinders 19 (Position nach Figur 5) befindet sich die Schwenkplatte 26 in der in Figur 5 dargestellten Position, während in der anderen Endposition des Luftzylinders 19 sich die Schwenkplatte 26 in der in Figur 6 dargestellten Position befindet.

Das gegenüber der Schwenkachse 18 freie Ende des Weichenträgers 20 weist zwei Anschlagflächen 20a, 20b auf. Gegenüberliegend hat die Schwenkplatte 26 zwei Vorsprünge 26a, 26b, die mit den beiden Anschlagflächen 20a, 20b zusammenarbeiten. Wird nun der Schwenkplattenträger 27 durch die Betätigungsstange 25 (in der Zeichnung gesehen) nach unten bewegt, so gleitet der Vorsprung 26a an der Anschlagfläche 20a vorbei, ohne den Weichenträger 20 zu betätigen. Die Weichenzunge 16 bzw. der Weichenträger 20 bleibt also in der in den Figuren 4 und 5 gezeichneten Position. Wird jedoch der Luftzylinder 19 betätigt, so daß die Schwenkplatte 26 in die in Figur 6 gezeichnete Position verschwenkt wird, so ist der Mechanismus zum Umschalten der Weichenzunge 16 vorbereitet. Bewegt sich nun der Schwenkplattenträger 27 mit der Schwenkplatte 26 (in der Zeichnung gesehen) nach unten, so nimmt der Vorsprung 26a die Anschlagfläche 20 und damit den Weichenträger 20 nach unten mit, so daß die Weichenzunge 16 (Figur 4) umgeschaltet wird.

Es wird noch hinzugefügt, daß der Weichenträger 20 und damit die Weichenzunge 16 durch Haftmagnete 7 in jeweils eine der beiden Endpositionen arretiert wird, und daß der Kraftantrieb die Haftkraft der Haftmagneten 7 überwindet und den Weichenträger 20 in die entgegengesetzte Position bewegt.

Befindet sich der Weichenträger 20 nun in der unteren Position (in den Figuren 5 und 6 nicht dargestellt), so ist ein Umschalten der Weichenzunge 16 in die ursprüngliche Position dann möglich, wenn sich der Luftzylinder 19 in der in Figur 5 dargestellten Endlage befindet. Hierdurch wird beim Aufwärtsbewegen des Schwenkplattenträgers 27 und der Schwenkplatte 26 der Weichenträger 20 an seiner Anschlagfläche 20b durch den Vorsprung 26b mitgenommen und wieder in die ursprüngliche Lage (Figur 5) zurückgeschaltet.

## Patentansprüche

1. Anlage zur Herstellung von aus mehreren Einzelpackungen bestehenden Gebinden mit mindestens einem Gebindepacker, dem die Einzelpackungen auf zwei ankommenden Packungsbahnen zweibahnig zugeführt werden,
dadurch gekennzeichnet, daß
eine Verteilvorrichtung (10) mit zwei ankommenden Packungsbahnen (4a, 4b) und vier abgehenden Packungsbahnen (5a, 6a; 5b, 6b) vorgesehen ist, an die zwei Gebindepacker (2, 3) mit zweibahniger Zuführung angeschlossen sind, und
daß die Verteilvorrichtung (10) derart ausgebildet ist, daß die ankommenden Einzelpackungen (1) wechselweise den beiden Packungsbahnen (5a, 5b oder 6a, 6b) des einen oder des anderen Gebindepackers (2 oder 3) , oder den beiden Packungsbahnen (5a, 5b und 6a, 6b) beider Gebindepacker (2 und 3), zugeführt werden.

2. Anlage nach Anspruch 1,
dadurch gekennzeichnet, daß die Gebindepacker (2, 3) jeweils zur Herstellung verschiedener Gebindeformationen eingerichtet sind.

3. Anlage nach Anspruch 1 oder 2,
dadurch gekennzeichnet, daß die Verteilstation (10) die ankommenden Einzelpackungen (1) nach einem vorbestimmten Verteilerschlüssel wechselweise den abgehenden Packungsbahnen (5a, 6a; 5b, 6b) der beiden Gebindepacker (2, 3) zuführt.

4. Verteilvorrichtung der Anlage nach einem oder mehreren der Ansprüche 1 bis 3,
gekennzeichnet durch
zwei erste, zwischen zwei Stellungen schaltbare Weichen (11), in deren Spuren (31, 31a, 31b; 32, 32a, 32b; 33, 33a, 33b; 34, 34a, 34b) von einem Transportmittel (13, 14) beförderte Mitnehmerträger (15) zum Transport von Einzelpackungen (1) von den ankommenden Packungsbahnen (4a; 4b) wahlweise zu den abgehenden Packungsbahnen (5a, 6a; 5b, 6b) geführt werden, und
zwei zweite Weichen (12), in deren Spuren (31a, 31b; 32a, 32b; 33a, 33b; 34a, 34b) die Mitnehmerträger (15) nach erfolgtem Transport der Einzelpackungen (1) zu den abgehenden Packungsbahnen wieder in die ursprüngliche Spur (31; 32; 33; 34) an den ankommenden Packungsbahnen zurückgeführt werden.

5. Vorrichtung nach Anspruch 4,
dadurch gekennzeichnet, daß das Transportmittel (13, 14) ein umlaufendes Kettenband (13, 14) ist, mit dem die einzelnen Mitnehmerträger (15) umlaufen, und daß die Mitnehmerträger (15) in den Spuren (31, 31a, 31b; 32, 32a, 32b; 33, 33a, 33b; 34, 34a, 34b) durch Schiffchen (17) in ihrer Querlage geführt werden.

6. Vorrichtung nach Anspruch 4 oder 5,
dadurch gekennzeichnet, daß jeder ankommenden Packungsbahn (4a, 4b) Mitnehmerträger (15) zugeordnet sind, die sich in Transportrichtung der Transportmittel (13, 14) abwechseln.

7. Vorrichtung nach Anspruch 5 oder 6,
dadurch gekennzeichnet, daß pro ankommender und pro abgehender Packungsbahn (4a, 4b; 5a, 5b; 6a, 6b) zwei Spuren (31, 31a, 31b; 32, 32a, 32b; 33, 33a, 33b; 34, 34a, 34b) vorgesehen sind und die Schiffchen (17) der zu einer ankommenden Packungsbahn gehörenden, aufeinander folgenden Mitnehmerträger (15) in jeweils abwechselnden Spuren laufen, die wiederum zu verschiedenen abgehenden Packungsbahnen (5a, 5b bzw. 6a, 6b) führen.

8. Vorrichtung nach Anspruch 7,
dadurch gekennzeichnet, daß die Mitnehmerträger (15) mit einer Kennnung versehen sind, die angibt, zu welcher Spur der ankommenden Packungsbahnen (4a, 4b) der jeweilige Mitnehmerträger (15) durch die zweite Weiche (12) zurückgeführt werden muß.

9. Vorrichtung nach Anspruch 8,
dadurch gekennzeichnet, daß die Kennung darin besteht, daß die Schiffchen (17) an den Mitnehmerträgern (15) in zwei verschiedenen seitlich versetzten Stellungen angebracht sind und in getrennten Spuren (31, 31a, 31b; 32, 32a, 32b; 33, 33a, 33b; 34, 34a, 34b) laufen, durch die sie wieder zu der ursprünglichen Spur der ankommenden Packungsbahn (4a, 4b) zurückgeführt werden.

10. Vorrichtung nach den Ansprüchen 4 bis 9,
dadurch gekennzeichnet, daß die beiden ersten Weichen (11) getrennt voneinander umschaltbar sind.

11. Vorrichtung nach einem der Ansprüche 4 bis 10,
dadurch gekennzeichnet, daß die Umschaltung der ersten Weiche (11) durch einen mechanischen Kraftantrieb (21-29) erfolgt, der zum Umschalten wahlweise mit der Weichenzunge (16a, 16b) gekoppelt wird.

12. Vorrichtung nach Anspruch 11,
dadurch gekennzeichnet, daß der Kraftantrieb (21-29) mit dem Transportmittel (13, 14) für die Mitnehmerträger (15) derart synchronisiert ist, daß ein Umschalten der ersten Weiche (11) nur dann erfolgen kann, wenn sich kein Mitnehmerträger (15) im kritischen Bereich der Weiche (11) befindet.

13. Vorrichtung nach Anspruch 11 oder 12,
dadurch gekennzeichnet,
daß der Kraftantrieb (21-29) einen um eine Schwenkachse (18) der Weichenzunge (16) schwenkbaren Schwenkplattenträger (27) aufweist, auf den eine ständige Hin- und Herbewegung ausgeübt wird,
daß am freien Ende des Schwenkplattenträgers (27) eine Schwenkplatte (26) gelagert ist,
daß mit der Weichenzunge (16) ein Weichenträger (20) verbunden ist, der an seinem freien Ende mit zwei Anschlagflächen (20a, 20b) versehen ist,
daß auf die Schwenkplatte (26) von einem Luftzylinder (19) eine Schwenkbewegung in jeweils eine von zwei Positionen ausgeführt wird, und
daß die Schwenkplatte zwei Vorsprünge (26a, 26b) aufweist, von denen jeweils einer zur Bestätigung der Weichenzunge mit der zugeordneten Anschlagfläche (20a 20b) des Weichenträgers (20) gekuppelt wird.

14. Vorrichtung nach einem der Ansprüche 4 bis 13,
dadurch gekennzeichnet, daß die erste Weiche (11) in den Endlagen durch Haftmagnete (7) arretiert ist.
